# EUROPÄISCHE PATENTSCHRIFT

(11) **EP 2 597 430 B1**
(45) Veröffentlichungstag und Bekanntmachung des Hinweises auf die Patenterteilung: **07.01.2015**
(21) Anmeldenummer: 11190160.9
(22) Anmeldetag: 22.11.2011
(51) Int. Cl.: G01D 5/34

(54) **Vorrichtung zur Messung des Drehwinkels zweier relativ zueinander um eine Drehachse rotierender Objekte**
Device for measuring the relative angle of two objects which can be rotated relative to each other around a rotation axis
Dispositif de mesure de l'angle de rotation de deux objets tournant l'un par rapport à l'autre autour d'un axe

(43) Veröffentlichungstag der Anmeldung: 29.05.2013
(73) Patentinhaber: SICK STEGMANN GmbH, 78166 Donaueschingen (DE)
(72) Erfinder: Hopp, David, 78166 Donaueschingen (DE); Speidel, Michael, 79110 Freiburg (DE)
(74) Vertreter: Patentanwälte Westphal, Mussgnug & Partner

(56) Entgegenhaltungen:
- EP-A1- 2 187 178
- US-A- 5 424 535

## Beschreibung

Die Erfindung betrifft eine Vorrichtung zur Messung des Drehwinkels zweier relativ zueinander um eine Drehachse rotierender Objekte gemäß dem Oberbegriff des Patentanspruchs 1.

Für viele Anwendungen ist es von grundlegender Bedeutung, den Drehwinkel eines rotierenden Objekts zu messen. Im Allgemeinen wird dabei der Drehwinkel des rotierenden Objekts relativ zu einem feststehenden, mit einem Maßstab behafteten Objekt gemessen. Beispielsweise kann es sich bei dem rotierenden Objekt um die rotierende Welle eines Motors handeln, welche sich relativ zu einem feststehenden Maschinenteil dreht. Der Maßstab kann dabei sowohl inkrementell als auch absolut sein. Dabei ist es wünschenswert, eine möglichst toleranzunempfindliche Messung der relativen Drehbewegung durchführen zu können, welche jedoch eine hohe Genauigkeit aufweist. Im Idealfall erfolgt die Messung berührungslos, um mechanischen Verschleiß zu vermeiden.

Die EP 2 187 178 A1 offenbart ein Messprinzip unter Ausnutzung der optischen Polarisation von Licht. Zur Messung des Drehwinkels zweier gegeneinander rotierender Objekte sendet ein Sender linear polarisiertes Licht aus. Das Licht tritt durch einen Polarisationsfilter hindurch, der sich gegenüber dem Sender in Abhängigkeit vom Drehwinkel dreht. Die Intensität des durch den Polarisationsfilter durchtretenden Lichts wird durch einen Empfänger gemessen und als drehwinkelabhängiges Signal ausgewertet.

Nachteilig bei der Verwendung von Polarisation zur Messung des Drehwinkels zweier relativ zueinander rotierender Objekte ist, dass der Drehwinkel aufgrund der Symmetrie eines linearen Polarisators mechanisch nicht auf 360° absolut messbar ist, sondern lediglich auf 180°.

Aus der US 7,777,879 B2 ist es bekannt, auf einen Polarisator Codespuren anzubringen, welche mit zusätzlichen Lichtsendern und Lichtempfängern ausgelesen werden, um eine Verdrehung des Polarisators um 180° zu ermitteln und somit eine absolute Winkelbestimmung über 360° zu erreichen. Auch eine derartige Anordnung mit zusätzlichen Sendern und Empfängern ist aufwendig und kostenintensiv.

Die Aufgabe Erfindung besteht daher darin, eine verbesserte Vorrichtung zur Messung des Drehwinkels zweier relativ zueinander um eine Drehachse rotierender Objekte anzugeben, welche insbesondere auf einfache und kostengünstige Weise den Drehwinkel auf 360° absolut bestimmen kann.

Die Aufgabe der Erfindung wird gelöst durch eine Vorrichtung mit den Merkmalen des Patentanspruchs 1.

Vorteilhafte Ausgestaltungen und Weiterbildungen der Erfindung sind in den abhängigen Ansprüchen angegeben.

Die erfindungsgemäße Vorrichtung zur Messung des Drehwinkels zweier relativ zueinander um eine Drehachse rotierende Objekte, mit genau einem dem einen Objekt zugeordneten Sender, der Licht aussendet, welches entweder polarisiert ist oder mittels eines Polarisationsfilters polarisiert wird, und mit einem Polarisator, wobei sich der Sender und der Polarisator in Abhängigkeit vom Drehwinkel relativ zueinander drehen, zeichnet sich dadurch aus, dass der Polarisator ein polarisierenden Bereich und einen nicht polarisierenden Bereich aufweist, wobei der nicht polarisierende Bereich exzentrisch zur Drehachse angeordnet ist, und dass die Vorrichtung wenigstens einen ersten Empfänger und einen zweiten Empfänger aufweist, welche zumindest einen Teil der durch den Polarisator durchtretenden oder der von dem Polarisator reflektierten Lichtintensität messen, um drehwinkelabhängige Signale zu erzeugen, wobei der erste Empfänger einen ersten Akzeptanzbereich und der zweite Empfänger einen zweiten, von dem ersten Akzeptanzbereich verschiedenen Akzeptanzbereich aufweist.

Als Akzeptanzbereiche werden dabei die Teilräume bezeichnet, aus denen der entsprechende Empfänger Licht detektieren kann. Beispielsweise sind die Teilräume durch Ebenen, in welchen die Drehachse liegt, voneinander getrennt. Die Detektion von Streulicht aus benachbarten Teilräumen kann in der Regel jedoch nicht vollständig ausgeschlossen werden. Die beiden Empfänger sind somit derart angeordnet, dass sie nicht das gesamte durch den Polarisator durchtretende oder von dem Polarisator reflektierende Licht detektieren, sondern lediglich das aus dem entsprechenden vor dem Polarisator angeordneten Teilraum kommende Licht. Durch den polarisierenden Bereich des Polarisators erfährt das linear polarisierte Licht des Lichtsenders in Abhängigkeit des Drehwinkels eine Modulation der Intensität. Durch die Segmentierung des Polarisators in einem polarisierenden Bereich und einen exzentrisch zur Drehachse angeordneten nicht polarisierenden Bereich erfährt das Licht zusätzlich eine überlagerte Modulierung. Durch die zwei Empfänger mit unterschiedlichen Akzeptanzbereichen weisen die beiden Maxima der jeweils in den Empfängern detektierenden Signale unterschiedliche maximale Amplitude auf. Das Summensignal der beiden Detektoren ergibt ein Signal mit zwei Maxima gleicher Amplitude. Zur Detektion der eindeutigen Zuordnung der Winkelposition auf 360° kann das Differenzsignal der Signale der beiden Empfänger gebildet werden.

Vorzugsweise ist der nicht polarisierende Bereich als Kreissegment oder als Kreissektor oder als durch zwei sich schneidende Sekanten abgegrenzter Bereich ausgebildet, um eine einfache und kostengünstig herzustellende Abgrenzung des polarisierenden Bereichs gegen den nicht polarisierenden Bereich zu ermöglichen.

Gemäß einer bevorzugten Ausführungsform ist der nicht polarisierende Bereich als absorbierender Bereich ausgebildet, welcher besonders einfach und kostengünstig herstellbar ist.

Gemäß einer alternativen bevorzugten Ausführungsform der Erfindung ist der nicht polarisierende Bereich als reflektierender Bereich ausgebildet, welcher in einem von 180° verschiedenen Winkel zur Fläche des polarisierenden Bereichs angeordnet ist, um zu vermeiden, dass das reflektierte Licht von den Empfängern detektiert wird.

Vorzugsweise ist der Polarisator als reflektierender Polarisator ausgebildet, um einen einfachen und kompakten Aufbau zu ermöglichen.

Gemäß einer besonders bevorzugten Ausführungsform der Erfindung ist zwischen dem Polarisator und den Empfängern eine Blende angeordnet, welche pro Empfänger eine Öffnung und insbesondere eine zentrische Öffnung für den Sender aufweist. Eine derartige Blende ermöglicht eine grobe Toleranzierung der lateralen Positionen der Empfänger.

Gemäß einer bevorzugten Ausführungsform der Erfindung sind der erste und der zweite Empfänger im Winkelabstand von 180° symmetrisch zum Sender angeordnet, was die Auswertung der detektierten Signale besonders vereinfacht. Vorzugsweise sind ein dritter und ein vierter Empfänger vorgesehen, wobei die vier Empfänger jeweils im Winkelabstand von 90° zueinander angeordnet sind. Mit einer derartigen Anordnung ist es auf einfache Art und Weise möglich, den absoluten Drehwinkel des Objekts über 360° zu bestimmen.

Besonders bevorzugt sind insgesamt acht Empfänger vorgesehen, welche im gleichen Winkelabstand zueinander angeordnet sind, um die Genauigkeit des ermittelten Winkels zu verbessern.

Gemäß einer bevorzugten Ausführungsform der Erfindung weist der polarisierende Bereich des Polarisators wenigstens zwei unterschiedliche Polarisationsrichtungen auf, um die Auflösung der Winkelbestimmung bzw. die Signalqualität zu verbessern.

Die Erfindung wird anhand der nachfolgenden Figuren ausführlich erläutert. Es zeigen:
- Figur 1: eine schematische Darstellung einer Vorrichtung zur Messung des Drehwinkels zweier relativ zueinander rotierender Objekte gemäß einem Ausführungsbeispiel der Erfindung,
- Figur 2: die Vorrichtung gemäß Figur 1 mit einer zusätzlichen Blende,
- Figur 3: eine Draufsicht auf den Polarisator gemäß Figur 1 in einem ersten Ausführungsbeispiel,
- Figur 4: eine Draufsicht auf den Polarisator gemäß Figur 1 in einem zweiten Ausführungsbeispiel,
- Figur 5: eine schematische Darstellung des Optikmoduls der Vorrichtung gemäß Figur 1 in einem ersten Ausführungsbeispiel,
- Figur 6: eine schematische Darstellung des Optikmoduls der Vorrichtung gemäß Figur 1 in einem zweiten Ausführungsbeispiel,
- Figur 7: eine schematische Darstellung der Blende der Vorrichtung gemäß Figur 2 in einem ersten Ausführungsbeispiel,
- Figur 8: eine schematische Darstellung der Blende der Vorrichtung gemäß Figur 2 in einem zweiten Ausführungsbeispiel,
- Figur 9: die Signalamplituden der von dem ersten und zweiten Empfänger der Vorrichtung gemäß Figur 1 detektierten Signale und
- Figur 10: die Amplitude des Summensignals der Signale der ersten und zweiten Empfänger der Vorrichtung gemäß Figur 1.

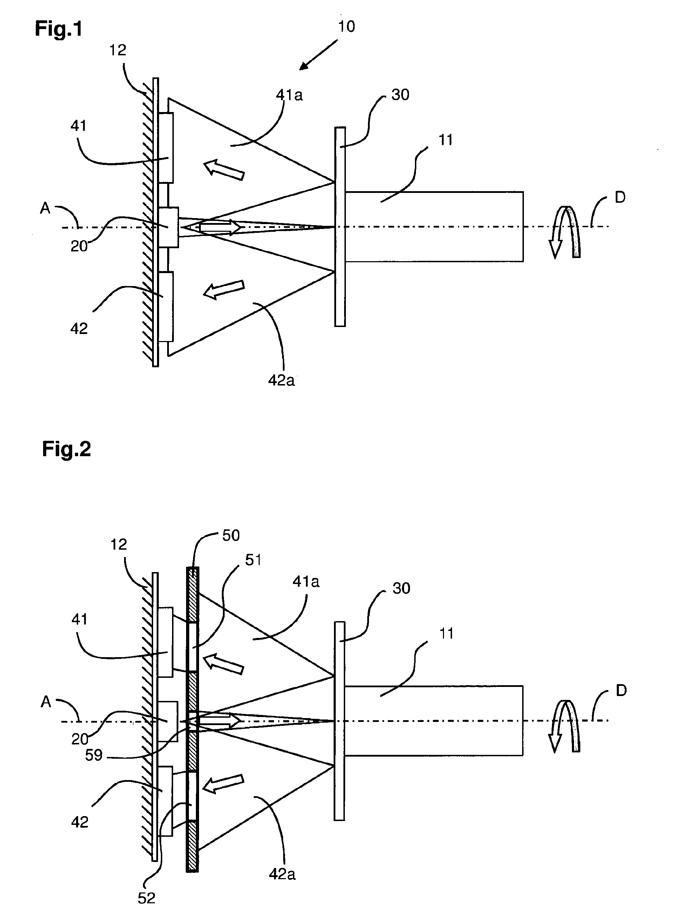

Figur 1 zeigt eine schematische Darstellung einer Vorrichtung 10 zur Messung des Drehwinkels zweier um eine Drehachse D relativ zueinander rotierender Objekte 11, 12. Dabei ist lediglich das Objekt 11 rotierend ausgebildet, beispielsweise als Welle eines Motors, wobei der Drehwinkel der Welle in Bezug zu einem feststehenden Teil, beispielsweise dem Motorgehäuse oder einem feststehenden Maschinenteil, welches das andere Objekt 12 bildet, ermittelt werden soll.

Die Vorrichtung 10 weist einen Sender 20 auf, welcher polarisiertes Licht aussendet oder dessen unpolarisiertes Licht mittels eines Polarisationsfilters polarisiert wird, wobei der Sender 20 in dem vorliegenden Ausführungsbeispiel feststehend ausgebildet ist und insbesondere an dem Objekt 12 angeordnet ist. Der Sender 20 weist eine optische Achse A auf, welche idealerweise mit der Drehachse D zusammenfällt.

Der rotierenden Welle ist ein sich mit der Welle drehender Polarisator 30 zugeordnet, welcher vorliegend als reflektierender Polarisator ausgebildet ist. Dazu kann beispielsweise der Polarisator 30 einen Polarisationsfilter und einen dahinter angeordneten Spiegel aufweisen.

Die Vorrichtung 10 weist einen ersten Empfänger 41 und einen zweiten Empfänger 42 auf, welche in einem Winkelabstand von 180° zueinander symmetrisch zur der optischen Achse A und somit insbesondere zu dem Sender 20 angeordnet sind. Vorliegend sind der erste Empfänger 41 und der zweite Empfänger 42 feststehend an dem Objekt 12 angeordnet. Die Vorrichtung 10 wird somit im Reflektionsmodus betrieben. Grundsätzlich ist ein Betrieb in Transmission ebenfalls möglich, wenn die Empfänger 41, 42 aus Sicht des Senders 22 hinter dem Polarisator 30 angeordnet sind.

Der erste Empfänger 41 weist ein Akzeptanzbereich 41a auf. Der zweite Empfänger 42 weist einen Akzeptanzbereich 42 auf. Dabei sind die Akzeptanzbereich 41a, 42a voneinander verschieden. Eine Überlappung der Akzeptanzbereiche 41a, 42a ist prinzipiell möglich. Streulicht aus benachbarten Akzeptanzbereichen ist in der Regel nicht vollständig auszuschließen. Bei dem in Figur 1 dargestellten Ausführungsbeispiel mit genau zwei Empfängern 41, 42 sind die Akzeptanzbereiche 41a, 42a im Wesentlichen als benachbarte Halbräume ausgebildet, welche durch eine Ebene, in welcher die optische Achse A liegt, gegeneinander getrennt sind. Der erste Empfänger 41 detektiert somit im Wesentlichen das von dem im Akzeptanzbereich 41a befindlichen Teil des Polarisators 30 reflektierten Lichts, während der zweite Empfänger 42 im Wesentlichen das von dem im Akzeptanzbereich 42a befindlichen Teil des Polarisators 30 reflektierte Licht detektiert.

Abhängig vom Drehwinkel des rotierenden Objekts 11 ändert sich die Intensität des Lichts, welches in den Empfängern 41, 42 detektiert wird, und ist maximal, wenn die Polarisationsebene des polarisierten Lichts des Senders 20 mit der Polarisationsebene des Polarisators 30 übereinstimmt, und minimal, wenn die Polarisationsebene des polarisierten Lichts des Senders 20 senkrecht zur Polarisationsebene des Polarisators 30 steht. Bei einer Drehung des Objekts 11 um 360° ergibt sich ein cos²-Signal mit zwei Maxima.

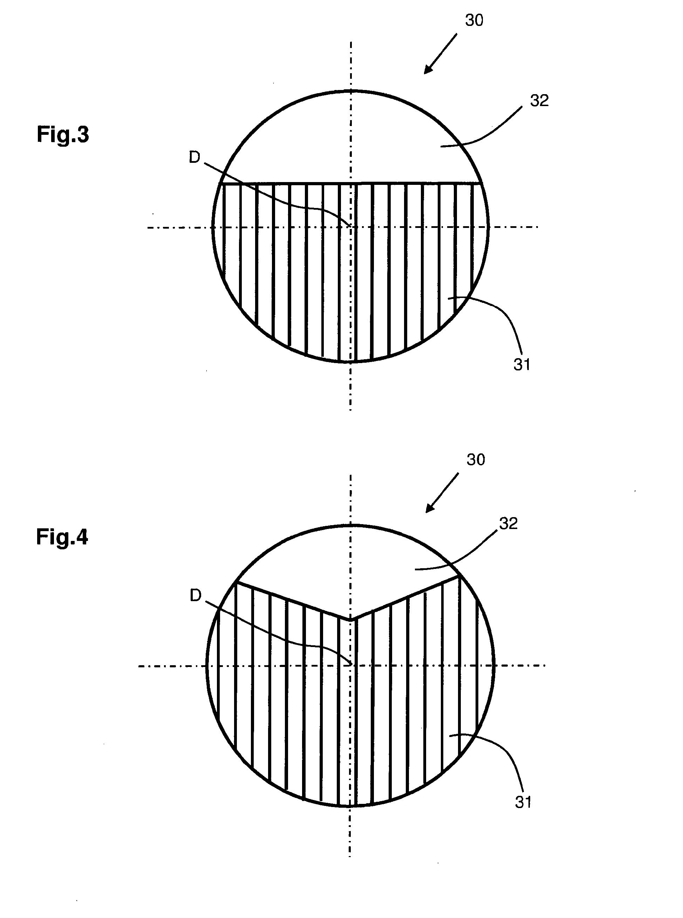

Die Figuren 3 und 4 zeigen zwei Ausführungsbeispiele des Polarisators 30 der Vorrichtung gemäß Figur 1. Der Polarisator 30 weist einen polarisierenden Bereich 31 und einen nicht polarisierenden Bereich 32 auf. Der nicht polarisierende Bereich 32 kann beispielsweise als absorbierende Fläche oder als reflektierende Fläche ausgebildet sein. Bei Verwendung einer reflektierenden Fläche ist es vorteilhaft, wenn die Oberfläche der reflektierenden Fläche in einem von 180° verschiedenen Winkel an die Fläche des polarisierenden Bereichs 31 angrenzt, um zu vermeiden, dass das reflektierte Licht von den Empfängern 41, 42 detektiert wird.

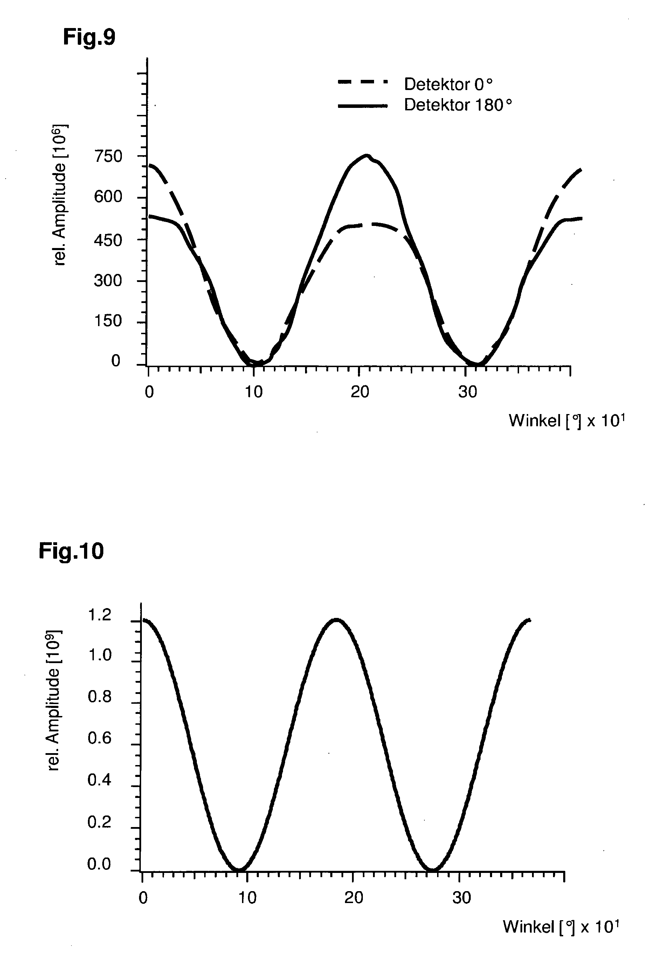

Der nicht polarisierende Bereich 32 ist exzentrisch zur Drehachse D angeordnet und kann beispielsweise, wie in Figur 3 dargestellt, als Kreissegment oder, wie nicht in den Figuren dargestellt, als Kreissektor ausgebildet sein. Wie in Figur 4 dargestellt, kann der nicht polarisierende Bereich 32 auch als durch zwei sich schneidende Sekanten begrenzter Bereich ausgebildet sein. Grundsätzlich kann der nicht polarisierende Bereich 32 beliebige Formen annehmen, sofern diese nicht um diese nicht um die Drehachse D um 180° rotationssymmetrisch ausgebildet sind. Eine derartige Ausgestaltung des Polarisators 30 mit dem nicht polarisierenden Bereich 32 bewirkt eine zusätzliche Modulation der in den Empfängern 41, 42 detektierten Signale derart, dass die beiden Maxima des cos²-Signals unterschiedliche Amplituden aufweisen. Die Signalamplituden der beiden Empfänger 41, 42 der Vorrichtung gemäß Figur 1 bei Verwendung eines Polarisators 30 beispielsweise gemäß Figur 3 oder 4 sind in Figur 9 dargestellt. Das Summensignal der beiden Empfänger 41, 42, welches der gesamten von dem Polarisator 30 reflektierten Lichtintensität entspricht, weist, wie in Figur 10 dargestellt, zwei gleich große Maxima auf. Aus dem Differenzsignal der Signale der beiden Empfänger 41, 42 lässt sich jedoch ermitteln, ob die Welle 11 in einer Position oder in einer um 180° dazu verdrehten Position angeordnet ist, so dass insgesamt eine Winkelbestimmung über ein Drehwinkel von 360° ermöglicht wird.

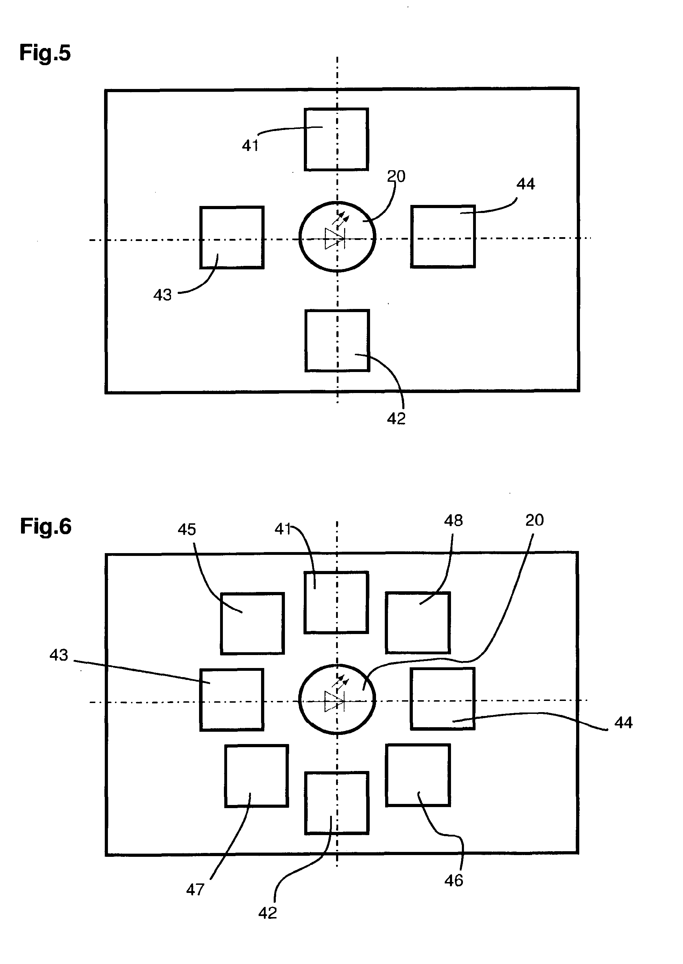

Dazu weist in einer Ausführungsform die Vorrichtung gemäß Figur 1 nicht nur die beiden Empfänger 41, 42 auf, sondern zusätzlich einen dritten Empfänger 43 und einen vierten Empfänger 44, die in einem Winkelabstand von 180° zueinander und in einem Winkelabstand von 90° zu den Empfängern 41, 42 angeordnet sind, wie in Figur 5 dargestellt. Die Empfänger 43, 44 liefern ein sin²-Signal, bei welchem ebenfalls durch die Segmentierung des Polarisators 30 in einem polarisierenden Bereich 31 und einem nicht polarisierenden Bereich 32 die beiden Maxima der einzelnen Empfänger 43, 44 unterschiedliche Amplituden aufweisen, so dass insgesamt mit den vier Empfängern 41, 42, 43, 44 eine absolute Winkelbestimmung über einen Drehwinkel von 360° möglich ist. Die Akzeptanzbereiche der vier Empfänger 41, 42, 43, 44 sind dabei im Wesentlichen vier aneinander grenzende Teilräume, die durch zwei im Wesentlichen senkrecht zueinander verlaufende Ebenen, deren Schnittgraden der optischen Achse A entspricht, gegeneinander abgetrennt sind.

Um die Signalqualität verbessern und insbesondere Streulichteinfall aus benachbarten Akzeptanzbereichen verringern und laterale Aufbautoleranzen der Empfänger 41, 42 entschärfen zu können, ist in einer in Figur 2 dargestellten Ausführungsform zwischen den Empfängern 41, 42 und dem Polarisator 30 eine Blende 50 angeordnet, welche in einem Winkelabstand von 180° zueinander eine erste Öffnung 51 und eine zweite Öffnung 52 aufweisen, durch welche Licht aus den Akzeptanzbereichen 41a, 42a auf die Empfänger 41, 42 fällt. Bei einer wie in den Figuren 1 und 2 dargestellten Reflektionsanordnung weist die Blende 50 zusätzlich eine zentrische Öffnung 59 auf, damit das von dem Sender 20 ausgesandte Licht auf den Polarisator 30 fallen kann.

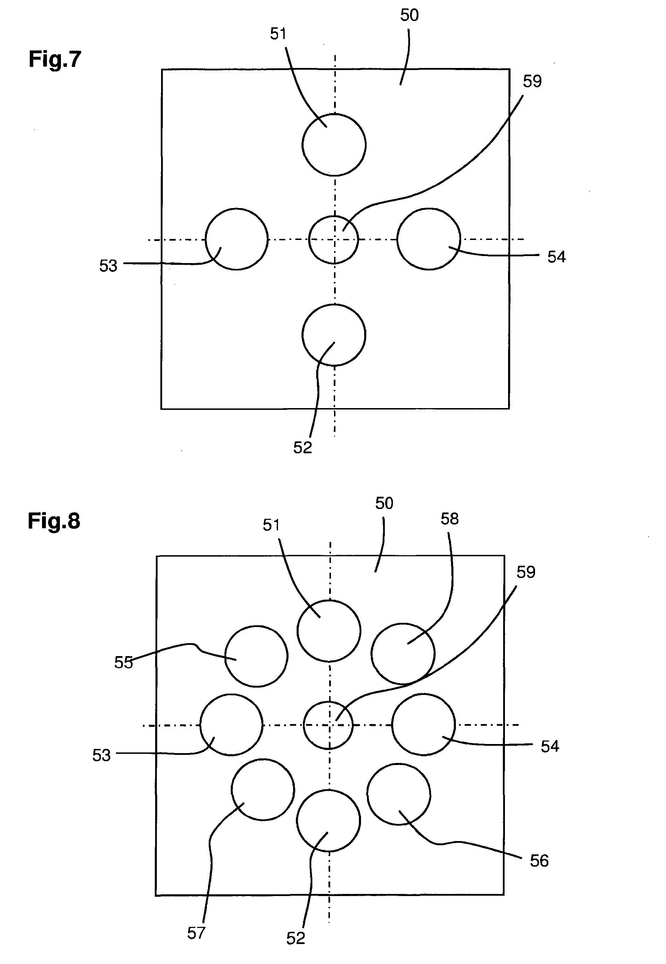

Für eine Anordnung mit den vier Empfängern 41, 42, 43, 44 kann die in Figur 7 dargestellte Blende 50 verwendet werden, welche zusätzlich zu der zentrischen Öffnung 59 und den zwei diametral zueinander angeordneten Öffnungen 51, 52 zwei weitere Öffnungen 53, 54 aufweist, welche ebenfalls diametral zueinander und im Winkelabstand von 90° zu den Öffnungen 51, 52 angeordnet sind.

Zur Erhöhung der Auflösung kann, wie in Figur 6 dargestellt, eine Anordnung von acht Empfänger 41, 42, 43, 44, 45, 46, 47, 48 verwendet werden, von welchen jeweils die zwei diametral gegenüberliegenden Empfängerpaare 41, 42; 43, 44; 45, 46; 47, 48 gemeinsam ausgewertet und das Differenzsignal der entsprechenden detektierten Signale ermittelt wird. Zur Verbesserung der Toleranzen kann auch vor einer derartigen Optikanordnung eine Blende 50 angeordnet werden, wie beispielsweise in Figur 8 dargestellt, welche im gleichen Winkelabstand zueinander acht Öffnungen 51, 52, 53, 54, 55, 56, 57, 58 und zusätzlich die entsprechende zentrische Öffnung 59 aufweist, welche vor dem Sender 20 angeordnet ist. Durch die Verwendung von weiteren Empfängerpaaren kann die Auflösung weiter verbessert werden.

Vor dem Sender 20 und/oder den Empfängern 41, 42, 43, 44, 45, 46, 47, 48 können eine oder mehrere Linsen angeordnet werden, um die Signalintensität zu erhöhen und/oder die Vorrichtung 10 toleranter gegenüber mechanischen Einflüssen zu gestalten.

Weiterhin ist es möglich, den polarisierenden Bereich 31 des Polarisators 30 mit zwei oder mehr voneinander getrennten Bereichen mit unterschiedlicher Polarisationsrichtung auszugestalten, um die Auflösung der Winkelbestimmung und die Signalqualität weiter zu verbessern.

Durch die Verwendung des segmentierten Polarisators 30 können sowohl der Polarisator 30 als auch die Empfänger 41, 42, 43, 44, 45, 46, 47, 48 flächig, d.h. integral, genutzt werden, wodurch die Vorrichtung 10 robust gegen Verschmutzungen ist. Die Vorrichtung 10 ist weiterhin robust gegen mechanische Toleranzen wie beispielsweise axialen Wellenhub, Verkippung oder Taumeln des rotierenden Objekts 11. Eine dynamische Exzentrizität und/oder Verkippung des Polarisators 30 durch die mechanischen Toleranzen des rotierenden Objekts 11 kann durch die differenzielle Auswertung der Signale der jeweils zwei zueinander um 180° versetzten Detektoren teilweise kompensiert werden.

Der durch die Vorrichtung 10 bestimmte Winkel ist unabhängig von der Ausgestaltung des nicht polarisierenden Bereichs 32. Zusätzliche Komponenten zur Bestimmung, ob das Objekt 11 in einer Position oder in einer um 180° dazu verdrehten Position angeordnet ist, sind jedoch nicht von Nöten. Dadurch ist ein einfacher und kostengünstiger und insbesondere kompakter Aufbau möglich.

Das rotierende Objekt 11 ist vorteilhafterweise unempfindlich gegen Temperaturen bis ca. 150°C, da an dem rotierenden Objekt 11 lediglich der Polarisator 30 angeordnet ist, das rotierende Objekt 11 jedoch mechanisch und damit thermisch entkoppelt von den optoelektronischen und elektronischen Komponenten, d.h. insbesondere dem Sender 20 und den Empfängern 41, 42, 43, 44, 45, 46, 47, 48, ist.

### Bezugszeichenliste

- 10: Vorrichtung
- 11: Objekt
- 12: Objekt
- 20: Sender
- 30: Polarisator
- 31: polarisierender Bereich
- 32: nicht polarisierender Bereich
- 41: erster Empfänger
- 41a: Akzeptanzbereich
- 42: zweiter Empfänger
- 42a: Akzeptanzbereich
- 43: dritter Empfänger
- 44: vierter Empfänger
- 45: Empfänger
- 46: Empfänger
- 47: Empfänger
- 48: Empfänger
- 50: Blende
- 51: Öffnung
- 52: Öffnung
- 53: Öffnung
- 54: Öffnung
- 55: Öffnung
- 56: Öffnung
- 57: Öffnung
- 58: Öffnung
- 59: Öffnung
- A: optische Achse
- D: Drehachse

## Patentansprüche

1. Vorrichtung (10) zur Messung des Drehwinkels zweier relativ zueinander um eine Drehachse (D) rotierender Objekte (11, 12), mit genau einem dem einen Objekt (11) zugeordneten Sender (20), der Licht aussendet, welches entweder polarisiert ist oder mittels eines Polarisationsfilters polarisiert wird, und mit einem Polarisator (30), wobei sich der Sender (20) und der Polarisator (20) in Abhängigkeit vom Drehwinkel relativ zueinander drehen,
**dadurch gekennzeichnet, dass** der Polarisator (30) einen polarisierenden Bereich (31) und einen nicht polarisierenden Bereich (32) aufweist, wobei der nicht polarisierende Bereich (31) exzentrisch zur Drehachse (D) angeordnet ist, und dass die Vorrichtung (10) wenigstens einen ersten Empfänger (41) und einen zweiten Empfänger (42) aufweist, welche zumindest einen Teil der durch den Polarisator (30) durchtretenden oder der von dem Polarisator (30) reflektierten Lichtintensität messen, um drehwinkelabhängige Signale zu erzeugen, wobei der erste Empfänger (41) einen ersten Akzeptanzbereich (41a) und der zweite Empfänger (42) einen zweiten, von dem ersten Akzeptanzbereich (41a) verschiedenen Akzeptanzbereich (42a) aufweist.

2. Vorrichtung nach Anspruch 1,
**dadurch gekennzeichnet, dass** der nicht polarisierende Bereich (32) als Kreissegment oder als Kreissektor ausgebildet ist.

3. Vorrichtung nach einem der vorhergehenden Ansprüche,
**dadurch gekennzeichnet, dass** der nicht polarisierende Bereich (32) als absorbierender Bereich ausgebildet ist.

4. Vorrichtung nach einem der vorhergehenden Ansprüche,
**dadurch gekennzeichnet, dass** der nicht polarisierende Bereich (32) als reflektierender Bereich ausgebildet ist, welcher in einem von 180° verschiedenen Winkel zur Fläche des polarisierenden Bereichs (31) angeordnet ist.

5. Vorrichtung nach einem der vorhergehenden Ansprüche,
**dadurch gekennzeichnet, dass** der Polarisator (30) als reflektierender Polarisator ausgebildet ist.

6. Vorrichtung nach einem der vorhergehenden Ansprüche,
**dadurch gekennzeichnet, dass** zwischen dem Polarisator (30) und den Empfängern (41, 42, 43, 44, 45, 46, 47, 48) eine Blende (50) angeordnet ist, welche pro Empfänger (41, 42, 43, 44, 45, 46, 47, 48) eine Öffnung (51, 52, 53, 54, 55, 56, 57, 58) und insbesondere eine zentrische Öffnung (49) für den Sender (20) aufweist.

7. Vorrichtung nach einem der vorhergehenden Ansprüche,
**dadurch gekennzeichnet, dass** der erste und der zweite Empfänger (41, 42) im Winkelabstand von 180° symmetrisch zum Sender (20) angeordnet sind und vorzugsweise ein dritter und ein vierter Empfänger (43, 44) vorgesehen sind, wobei die vier Empfänger (41, 42, 43, 44) jeweils im Winkelabstand von 90° zueinander angeordnet sind, und besonders bevorzugt insgesamt acht Empfänger (41, 42, 43, 44, 45, 46, 47, 48) vorgesehen sind, welche im gleichen Winkelabstand zueinander angeordnet sind.

8. Vorrichtung nach einem der vorhergehenden Ansprüche,
**dadurch gekennzeichnet, dass** der polarisierende Bereich (31) des Polarisators (30) wenigstens zwei unterschiedliche Polarisationsrichtungen aufweist.

## Claims

1. Device (10) for measuring the angle of rotation between two relatively to one another rotating objects (11, 12) about an axis of rotation (D) associated with exactly one transmitter (20) emitting light and associated to the one object (11), which light is either polarized or is polarized by a polarizing filter, and a polarizer (30), whereby the transmitter (20) and the polarizer (20) rotate relative to each other as a function of the rotation angle, **characterized in that** the polarizer (30) comprises a polarizing region (31) and a non-polarizing region (32), said non-polarizing region (31) is arranged eccentrically to the axis of rotation (D), and **in that** the device (10) comprises at least a first receiver (41) and a second receiver (42) which measure at least a portion of the light intensity passing the polarizer (30) or the light intensity reflected by the polarizer (30), to produce angle of rotation dependent signals, wherein the first receiver (41) comprises a first acceptance region (41a) and the second receiver (42) a second acceptance region (42a) different from the first acceptance region (41a).

2. Device according to claim 1, **characterized in that** the non-polarizing region (32) is designed as a circle segment or as a circle sector.

3. Device according to one of the preceding claims, **characterized in that** the non-polarizing region (32) is formed as an absorbent region.

4. Device according to one of the preceding claims, **characterized in that** the non-polarizing region (32) is formed as a reflecting portion which is arranged in an angle different from 180° to the surface of the polarizing region (31).

5. Device according to one of the preceding claims, **characterized in that** the polarizer (30) is formed as a reflective polarizer.

6. Device according to one of the preceding claims, **characterized in that** between the polarizer (30) and the receivers (41, 42, 43, 44, 45, 46, 47, 48) a diaphragm (50) is arranged which comprises an opening (51, 52, 53, 54, 55, 56, 57, 58) for each receiver (41, 42, 43, 44 45, 46, 47, 48) and in particular a central opening (49) for the transmitter (20).

7. Device according to one of the preceding claims, **characterized in that** the first and second receivers (41, 42) are arranged symmetrically to the transmitter (20) at an angular spacing of 180° and preferably a third and a fourth receiver (43, 44) are provided, wherein the four receivers (41, 42, 43, 44) are each arranged at an angular distance of 90° to each other, and more preferably a total of eight recipient (41, 42, 43, 44, 45, 46, 47, 48) are provided, which are arranged at the same angular distance from one another.

8. Device according to any of the preceding claims, **characterized in that** the polarizing region (31) of the polarizer (30) comprises at least two different directions of polarization.

## Revendications

1. Dispositif (10) pour mesurer l'angle de rotation entre les deux relativement à l'autre des objets tournants (11, 12) autour d'un axe de rotation (D) associé à exactement un émetteur (20) émettant de la lumière et associé à l'un des objets (11), laquelle lumière est soit polarisée est polarisée par un filtre de polarisation, et un polariseur (30), de sorte que l'émetteur (20) et le polariseur (20) tournent par rapport à l'autre en fonction de l'angle de rotation, **caractérisé en ce que** le polariseur (30) comprend une région de polarisation (31) et une région de non-polarisation (32), est disposé ledit non-polarisant région (31) excentrée par rapport à l'axe de rotation (D), et **en ce que** le dispositif (10) comprend au moins un premier récepteur (41) et un second récepteur (42) qui mesure au moins une partie de l'intensité de la lumière passant du polariseur (30) ou l'intensité de la lumière réfléchie par le polariseur (30), pour produire l'angle de rotation des signaux dépendant, dans lequel le premier récepteur (41) comprend une première zone de réception (41a) et le second récepteur (42), une deuxième région d'acceptation (42a) différente de la première région d'acceptation (41a).

2. Dispositif selon la revendication 1, **caractérisé en ce que** la région de non-polarisation (32) est conçu comme un segment de cercle ou d'un secteur de cercle.

3. Dispositif selon l'une des revendications précédentes, **caractérisé en ce que** la région de non-polarisation (32) est formée comme une région absorbante.

4. Dispositif selon l'une des revendications précédentes, **caractérisé en ce que** la région de non-polarisation (32) est formée comme une partie réfléchissante qui est disposée dans un angle différent de 180°. À la surface de la région de polarisation (31).

5. Dispositif selon l'une des revendications précédentes, **caractérisé en ce que** le polariseur (30) est réalisé sous la forme d'un polariseur réfléchissant.

6. Dispositif selon l'une des revendications précédentes, **caractérisé en ce qu'**entre le polariseur (30) et les récepteurs (41, 42, 43, 44, 45, 46, 47, 48), un diaphragme (50) est disposé, qui comprend un l'ouverture (51, 52, 53, 54, 55, 56, 57, 58) pour chaque récepteur (41, 42, 43, 44, 45, 46, 47, 48) et en particulier une ouverture centrale (49) pour l'émetteur (20).

7. Dispositif selon l'une des revendications précédentes, **caractérisé en ce que** le premier et le deuxième récepteurs (41, 42) sont disposés symétriquement par rapport à l'émetteur (20) à une distance angulaire de 180° Et de préférence un troisième et un quatrième récepteur (43, 44) sont prévus, dans lequel les quatre récepteurs (41, 42, 43, 44) sont chacun disposés à une distance angulaire de 90° les uns aux autres, et de préférence un total de huit destinataire (41, 42, 43, 44, 45, 46, 47, 48) sont prévus, qui sont disposés à la même distance angulaire les uns des autres.

8. Dispositif selon l'une quelconque des revendications précédentes, **caractérisé en ce que** la région de polarisation (31) du polariseur (30) comprend au moins deux directions de polarisation différentes.
